(19) Europäisches Patentamt
European Patent Office
Office européen des brevets

(11) **EP 4 336 425 A1**

(12) **EUROPEAN PATENT APPLICATION**

(43) Date of publication:
**13.03.2024 Bulletin 2024/11**

(21) Application number: **23180265.3**

(22) Date of filing: **20.06.2023**

(51) International Patent Classification (IPC):
**G06Q 10/04** (2023.01)   **G06Q 10/08** (2024.01)
**G06Q 10/083** (2024.01)

(52) Cooperative Patent Classification (CPC):
**G06Q 10/04; G06Q 10/08; G06Q 10/083**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.09.2022   JP 2022144118**

(71) Applicant: **FUJITSU LIMITED
Kawasaki-shi, Kanagawa 211-8588 (JP)**

(72) Inventor: **YAMAGUCHI, Hideshi
Kawasaki-shi, Kanagawa, 211-8588 (JP)**

(74) Representative: **Hoffmann Eitle
Patent- und Rechtsanwälte PartmbB
Arabellastraße 30
81925 München (DE)**

(54) **INFORMATION PROCESSING APPARATUS, OPTIMIZATION METHOD, AND OPTIMIZATION PROGRAM**

(57)   An information processing apparatus configured to: acquire spatial information related to a space in which a plurality of cargoes are disposed, the spatial information including a height of each of the plurality of subspaces, generate, according to the spatial information, a first constraint condition which indicates that no other cargo is present in one of the subspaces in a path from another of the subspaces where a cargo to be carried into or out is disposed to an entrance/exit of the space, a second constraint condition which indicates a number of cargoes that do not exceed the height of the subspace, and a third constraint condition which indicates a maximum carrying capacity of the cargoes, and determine, based on the constraint conditions, disposition of the plurality of cargoes in the space on condition that a cargo which exceeds the height of the subspace is not disposed.

## FIG. 1

Processed by Luminess, 75001 PARIS (FR)

**Description**

FIELD

The embodiments discussed herein are related to an information processing apparatus, an optimization method, and an optimization program.

BACKGROUND

When cargoes are disposed in a multi-story warehouse, a flat parking area, a vehicle transport ship, or the like, the cargoes or the like may obstruct carrying-in or carrying-out of other cargoes or vehicles. In order to suppress the obstruction by the cargoes or the like, disposition in, for example, carrying-in of the cargoes or the like is optimized.

For example, when thin sheet coils are transported from a plurality of warehouses to a single-story ship having an open ceiling and are loaded on the ship in two stages, a technique for optimizing the balance or the like of the ship is used. For a case where shipments are delivered from a plurality of shipment sources to a plurality of shipment destinations, a technique of creating a shipment plan with good transport efficiency is used in order to load other shipments after the shipments have been unloaded at shipment destinations and deliver the other shipments to the next shipment destinations. Furthermore, in a stowage plan (vehicle disposition) for a vehicle carrier ship, a technique of determining individual vehicle disposition is used so as to avoid an inboard obstacle in a block inside the ship and not to create a broken space.

Today, a technique of optimizing cargo disposition is known. This optimization is performed with consideration for enabling carrying in and unloading when disposition of vehicles in individual blocks in a vehicle transport ship is planned in a situation where carrying-in and carrying-out occur a plurality of times.

Japanese Laid-open Patent Publication Nos. 2003-173366, 2015-230660, and 2021-169369 are disclosed as related art.

SUMMARY

[TECHNICAL PROBLEM]

However, a cargo transport ship in which the height of decks is not uniform, for example, a cargo transport ship in which panels movable in the up-down direction are used for the ceiling is being used. In a case where optimization is performed on such a cargo transport ship by using the above-described optimization technique, accuracy of the optimization may degrade.

In one aspect, an object is to provide an information processing apparatus, a method for optimization, and an optimization program that may improve accuracy of optimization of cargo disposition.

[SOLUTION TO PROBLEM]

According to an aspect of the embodiments, an information processing apparatus includes an acceptance unit that spatial information related to a space in which a plurality of cargoes are disposed, the spatial information including a height of each of the plurality of subspaces and a first path between a plurality of subspaces included in the space; a generation unit that generates, according to the spatial information, a first constraint condition which indicates that no other cargo is present in one of the subspaces in the first path from another of the subspaces where a cargo to be carried into or a cargo to be carried out is disposed to an entrance/exit of the space when the plurality of cargoes are carried into or carried from the space, a second constraint condition which indicates, for each of the plurality of subspaces, a number of cargoes that do not exceed the height of the subspace and that are able to be disposed in the subspace, and a third constraint condition which indicates, for each of the plurality of subspaces, a maximum carrying capacity of the cargoes that do not exceed the height of the subspace; and a determination unit that determines, based on the first constraint condition, the second constraint condition, and the third constraint condition, disposition of the plurality of cargoes in the space on condition that, in each of the plurality of subspaces, a cargo out of the plurality of cargoes which exceeds the height of the subspace is not disposed.

[ADVANTAGEOUS EFFECTS OF INVENTION]

In the one aspect, the information processing apparatus, the method for optimization, and the optimization program that may improve the accuracy of optimization of cargo disposition may be provided.

BRIEF DESCRIPTION OF DRAWINGS

FIG. 1 is a diagram explaining an information processing apparatus according to Embodiment 1;
FIG. 2 is a diagram explaining degradation of accuracy of optimization;
FIG. 3 is a diagram explaining the degradation of the accuracy of the optimization;
FIG. 4 is a functional block diagram illustrating a functional configuration of the information processing apparatus according to Embodiment 1;
FIG. 5 is a schematic diagram of a vehicle carrier ship;
FIG. 6 is a diagram representing a space of the vehicle carrier ship in a graph structure;
FIG. 7 is a diagram explaining a deck height management table;
FIG. 8 is a diagram explaining a vehicle carrying-in/carrying-out table;
FIG. 9 is a schematic diagram in which blocks are divided into cells;
FIG. 10 is a diagram explaining solving by an optimization apparatus and a computation of vehicle disposition represented by a solution;
FIG. 11 is a diagram explaining an optimized vehicle disposition;
FIG. 12 is a flowchart illustrating a flow of an optimization process;
FIG. 13 is a flowchart illustrating a flow of a formulation calculation; and
FIG. 14 is a diagram explaining an example of a hardware configuration.

DESCRIPTION OF EMBODIMENTS

Hereinafter, embodiments of an information processing apparatus, a method for optimization, and an optimization program disclosed herein will be described in detail with reference to the drawings. The embodiments do not limit the present disclosure. The embodiments may be appropriately combined with each other as long as no contradiction occurs.

[Embodiment 1]

(Description of Information Processing Apparatus)

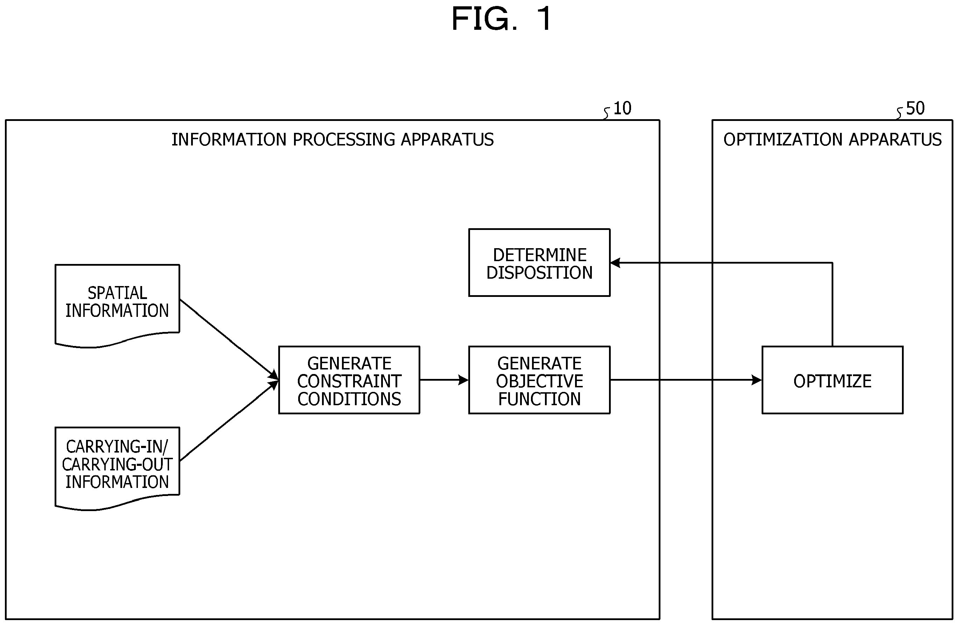

FIG. 1 is a diagram explaining an information processing apparatus 10 according to Embodiment 1. An information processing apparatus 10 illustrated in FIG. 1 is an example of a computer apparatus. When cargoes are disposed in a multi-story warehouse, a flat parking area, a vehicle transport ship, or the like, the cargoes or the like may obstruct carrying-in or carrying-out of other cargoes or vehicles. In order to suppress the obstruction by the cargoes or the like, the computer apparatus optimizes cargo disposition in, for example, carrying-in of the cargoes or the like. An optimization apparatus 50 is an example of an annealing calculator, an Ising machine, or the like and executes optimization of a calculation expression input from the information processing apparatus 10.

According to Embodiment 1, as an example of the cargo disposition, a vehicle transport ship into which vehicles are loaded at a plurality of ports in a single voyage and from which vehicles are unloaded at a plurality of ports in the single voyage is described as an example. A vehicle is an example of the cargo, and the vehicle transport ship is an example of a target space in which the cargo is disposed. The target space includes a plurality of decks, and each deck is divided into a plurality of blocks.

As illustrated in FIG. 1, the information processing apparatus 10 accepts input of spatial information on the inside of the vehicle transport ship in which vehicles are disposed, which is divided into a plurality of sections (also referred to as subspaces), and in which paths between the plurality of sections and a path from each of the plurality of sections to an entrance/exit are defined. Likewise, the information processing apparatus 10 accepts input of carrying-in/carrying-out information corresponding to a so-called vehicle carrying-in/carrying-out table indicating how many vehicles are loaded at which port and how many vehicles are unloaded at which port.

The information processing apparatus 10 generates constraint conditions by using the input information. For example, the information processing apparatus 10 generates a constraint condition indicating that there is no other vehicle in a path, to the entrance/exit, from a vehicle to be loaded or unloaded when the vehicle is loaded or unloaded. The information processing apparatus 10 also generates a constraint condition indicating that the number of vehicles to be loaded and the number of vehicles to be unloaded are designated in advance. The information processing apparatus 10 also generates a constraint condition indicating that, in each of the plurality of sections, vehicles are disposed within a preset range of a carrying capacity (maximum carrying capacity).

After that, the optimization apparatus 50 executes optimization by using the constraint conditions generated by the information processing apparatus 10, and the information processing apparatus 10 determines an appropriate disposition of the vehicle by using an optimization result.

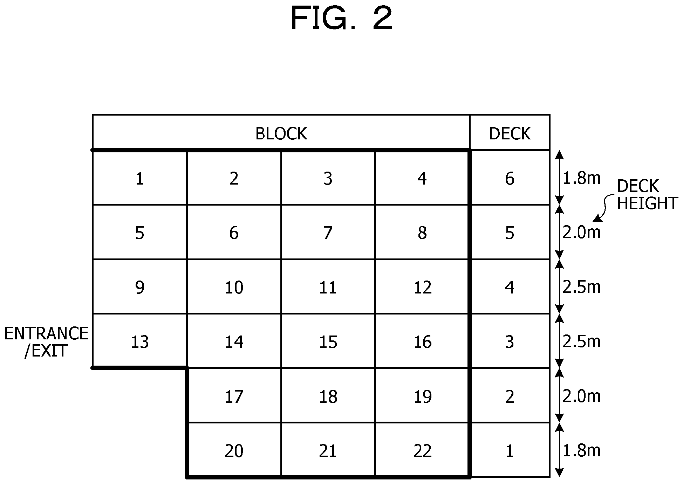

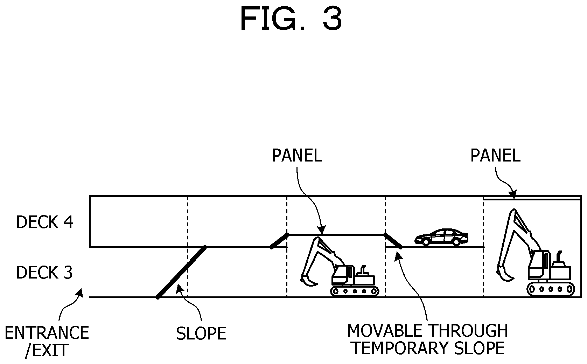

However, the height of decks in the ship is not necessarily uniform, and accuracy of the optimization may degrade in the above-described optimization technique. FIGs. 2 and 3 are diagrams explaining degradation of the accuracy of the optimization. As illustrated in FIG. 2, the ship includes therein a deck 1 having a height of 1.8 m, a deck 2 having a height of 2.0 m, a deck 3 having a height of 2.5 m, a deck 4 having a height of 2.5 m, a deck 5 having a height of 2.0 m, and a deck 6 having a height of 1.8 m. For example, the height varies from deck to deck. In this case, a vehicle having a high vehicle height is unable to be disposed in a deck having a low height in some cases. However, this point is not considered in the optimization using the above-described constraint conditions. Thus, the result of the optimization is not necessarily correct.

Even in a case where the height of the deck is variable, there is a possibility that degradation of the accuracy of optimization is explained. As illustrated in FIG. 3, in some cases a panel that serves as a ceiling of the deck 3 and a floor of the deck 4 is variable, and the height of the deck 3 may be increased. When there is a panel that allows movement of the ceiling, in the up-down direction, of a partial region in the deck as described above, a constraint on the vehicle height occurs for vehicles that may be disposed or pass through above or below the panel. However, since this point is not considered in the optimization using the above-described constraint conditions, the result of the optimization is not necessarily correct.

Accordingly, the information processing apparatus 10 according to Embodiment 1 provides a method for determining the disposition of vehicles having an appropriate vehicle height in consideration of at least the fact that the height of the decks in the ship is not uniform. Also, in consideration of the fact that the height of the decks is variable, the information processing apparatus 10 according to Embodiment 1 may further improve the accuracy of the vehicle disposition.

For example, the information processing apparatus 10 accepts spatial information on a target space in which cargoes having a predetermined height are disposed, which is divided into a plurality of sections, and in which the height of each of the plurality of sections, paths between the plurality of sections, and a path from each of the plurality of sections to the entrance/exit are defined.

In accordance with the spatial information, the information processing apparatus 10 generates a constraint condition 1 indicating that there is no other cargo in each section in the path from the cargo to be carried in or carried out to the entrance/exit at the time of carrying in or carrying out the cargo. Also, the information processing apparatus 10 generates a constraint condition 2 indicating, for each of the plurality of sections, the number of cargoes to be carried into and carried out from the section which is also the number of cargoes not exceeding the height of the section, and a constraint condition 3 indicating, for each of the plurality of sections, the maximum carrying capacity of the cargoes not exceeding the height of the section. After that, the information processing apparatus 10 determines the disposition of cargoes in the target space based on the constraint conditions 1, 2, and 3.

For example, the information processing apparatus 10 according to Embodiment 1 may improve the accuracy of the optimization of the cargo disposition by categorizing the height of the vehicle based on the deck height of the ship and generating the constraint conditions 1 to 3.

When a fourth constraint condition and a fifth constraint condition 5 corresponding to the height constraint of the panel are newly added, the information processing apparatus 10 may further improve the accuracy of the vehicle disposition in consideration of the fact that the height is variable.

(Functional Configuration)

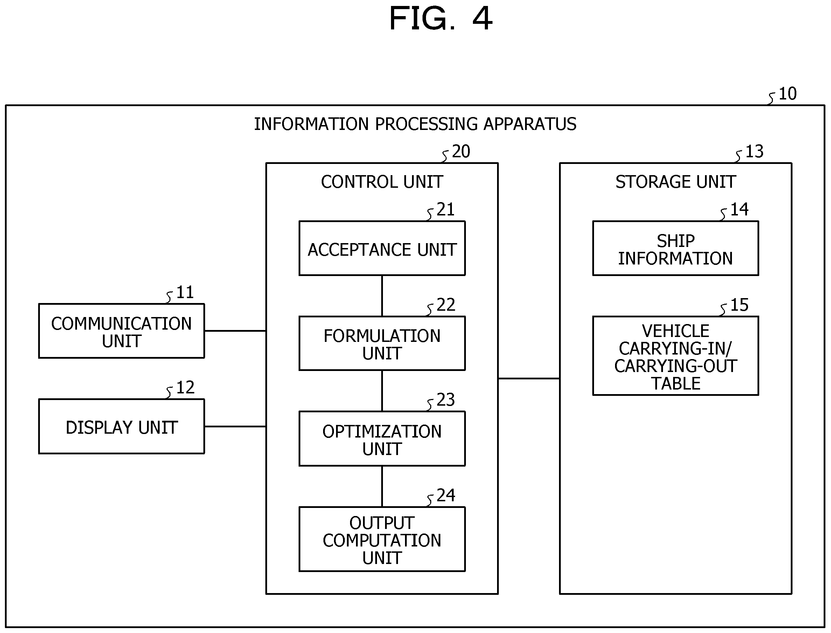

FIG. 4 is a functional block diagram illustrating a functional configuration of the information processing apparatus 10 according to Embodiment 1. As illustrated in FIG. 4, the information processing apparatus 10 includes a communication unit 11, a display unit 12, a storage unit 13, and a control unit 20.

The communication unit 11 is a processing unit that controls communication with other apparatuses and is realized by, for example, a communication interface or the like. For example, the communication unit 11 transmits and receives various types of data to and from an external apparatus such as an apparatus used by an administrator or the like.

The display unit 12 is a processing unit that displays various types of information and is realized by, for example, a display, a touch panel, or the like. For example, the display unit 12 displays a finally obtained vehicle disposition result, a calculated solving result, and the like.

The storage unit 13 is a processing unit that stores, for example, various types of data and a program to be executed by the control unit 20 and is realized by using, for example, a memory, a hard disk, or the like. The storage unit 13 stores ship information 14 and a vehicle carrying-in/carrying-out table 15.

The ship information 14 is information on the vehicle transport ship which is divided into a plurality of sections, in which the height of each of the plurality of sections, paths between the plurality of sections, and a path from each of the plurality of sections to the entrance/exit are defined, and in which the vehicles having a predetermined height are disposed. For example, the ship information 14 includes information obtained by graphing a schematic diagram of the vehicle carrier ship, a deck height management table, and the like.

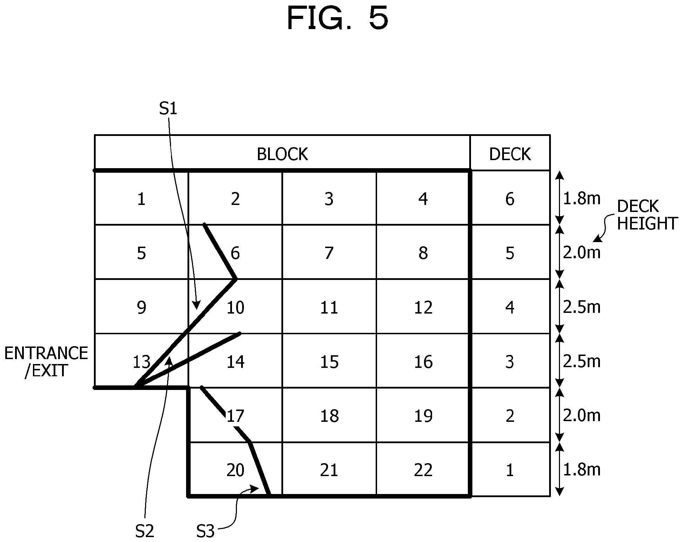

First, a schematic diagram of the vehicle carrier ship is described. FIG. 5 is a schematic diagram of the vehicle carrier ship. As schematically illustrated in FIG. 5, the vehicle transport ship has six floors from a deck 1 on a first floor to a deck 6 on a sixth floor. Each deck is divided into blocks, the entrance/exit is provided at a single position of the deck 3, and decks communicate with each other through a slopes S1, S2, and S3.

The deck 6 has a height of 1.8 m and is divided into four blocks from a block 1 to a block 4. The deck 5 has a height of 2.0 m and is divided into four blocks from a block 5 to a block 8. The deck 4 has a height of 2.5 m and is divided into four blocks from a block 9 to a block 12. The deck 3 has a height of 2.5 m and is divided into four blocks from a block 13 to a block 16. The deck 2 has a height of 2.0 m and is divided into three blocks from a block 17 to a block 19. The deck 1 has a height of 1.8 m and is divided into three blocks from a block 20 to a block 22.

The slope S1 is a path from the deck 6 and the deck 5 to the entrance/exit of the deck 3, the slope S2 is a path from the deck 4 to the entrance/exit, and the slope S3 is a path from the deck 2 and the deck 1 to the entrance/exit.

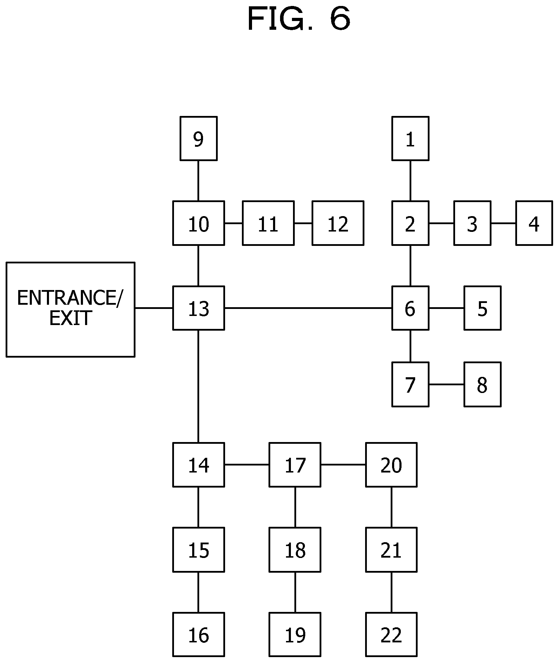

Next, the information obtained by graphing a schematic diagram of the vehicle carrier ship is described. FIG. 6 is a diagram representing a space of the vehicle carrier ship in a graph structure. As illustrated in FIG. 6, the blocks in the same deck communicate with each other. The blocks 1 to 4 of the deck 6 communicate with the entrance/exit sequentially through the block 2, the block 6, and the block 13. The blocks 5 to 8 of the deck 5 communicate with the entrance/exit sequentially through the block 6 and the block 13. The blocks 9 to 12 of the deck 4 communicate with the entrance/exit sequentially through the block 10 and the block 13.

The blocks 13 to 16 of the deck 3 communicate with the entrance/exit through the block 13. The blocks 17 to 19 of the deck 2 communicate with the entrance/exit sequentially through the block 17, the block 14, and the block 13. The blocks 20 to 22 of the deck 1 communicate with the entrance/exit sequentially through the block 20, the block 17, the block 14, and the block 13.

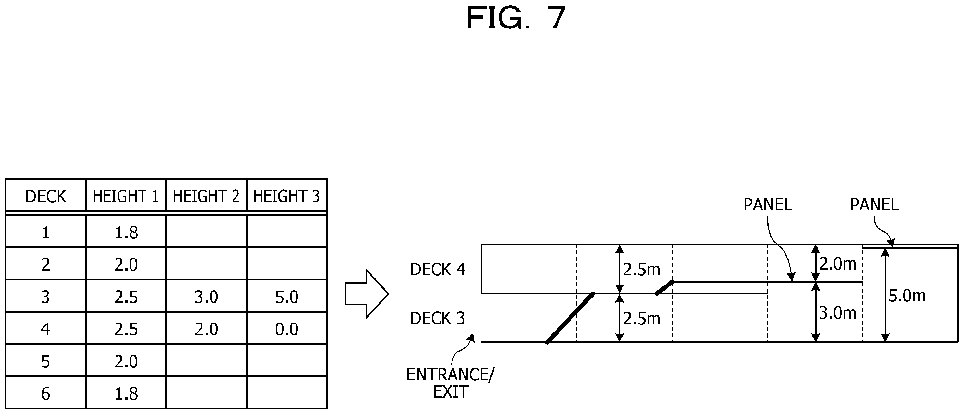

Next, the deck height management table is described. FIG. 7 is a diagram explaining the deck height management table. As illustrated in FIG. 7, in the deck height management table, the height of each deck is defined. A height 1 indicates the defined height. A height 2 and a height 3 indicate the maximum height to which the height may be changed due to the variability.

For example, in the example illustrated in FIG. 7, the heights of the decks 1, 2, 3, 4, 5, and 6 are respectively set to 1.8 m, 2.0 m, 2.5 m, 2.5 m, 2.0 m, and 1.8 m. The panels of the ceilings of the decks 3 and 4 are variable. The deck 3 has an area in which the height is changeable to 3.0 m and an area in which the height is changeable to 5.0 m. The deck 4 positioned above the deck 3 includes an area in which the height is changed to 2.0 m and an area in which the height is changed to 0.0 m depending on the position of the panel of the deck 3.

Other than the information on the graph structure including the deck positions, the block positions, the slope positions, and so forth illustrated in FIGs. 5 to 7, the ship information 14 includes carrying information in which, for example, the maximum carrying capacity of each block is defined.

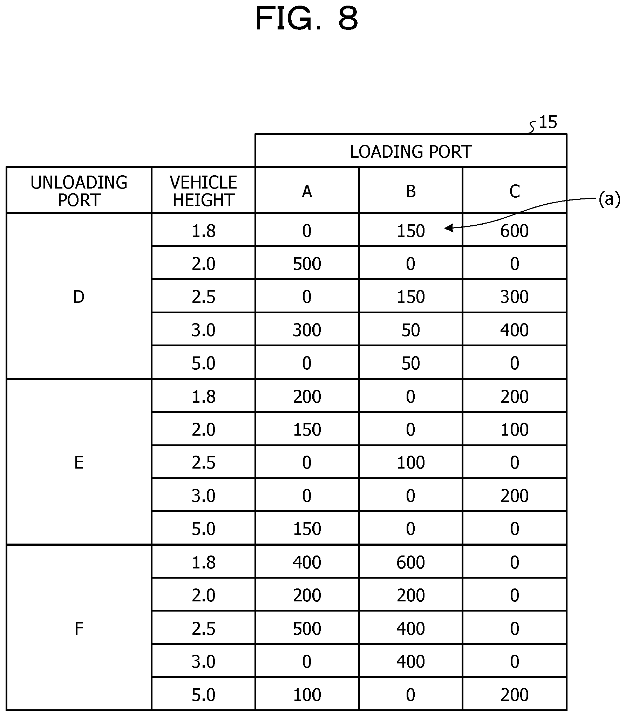

Referring back to FIG. 4, the vehicle carrying-in/carrying-out table 15 is an example of carrying-in/carrying-out information in which order of port call, the number of vehicles to be unloaded, and so forth are defined. FIG. 8 is a diagram explaining the vehicle carrying-in/carrying-out table 15. As illustrated in FIG. 8, in the vehicle carrying-in/carrying-out table 15, loading ports where the vehicles are loaded, unloading ports where the vehicles are unloaded, and the numbers of vehicles to be loaded/unloaded are associated with each other.

For example, in the vehicle carrying-in/carrying-out table 15, ports where the ship is to call are defined in the order of a port A, a port B, a port C, a port D, a port E, to a port F. The numerics in the vehicle carrying-in/carrying-out table 15 indicate the number of vehicles to be loaded and unloaded at each port, and the number of vehicles is defined on a vehicle height category-by-vehicle height category basis. The vehicle height category of "1.8" indicates vehicles having a vehicle height of smaller than or equal to 1.8 m, the vehicle height category of "2.0" indicates vehicles having a vehicle height of greater than or equal to 1.8 m and smaller than or equal to 2.0 m, the vehicle height category of "2.5" indicates vehicles having a vehicle height of greater than or equal to 2.0 m and smaller than or equal to 2.5 m, the vehicle height category of "3.0" indicates vehicles having a vehicle height of greater than or equal to 2.5 m and smaller than or equal to 3.0 m, and the vehicle height category of "5.0" indicates vehicles having a vehicle height of greater than or equal to 3.0 m and smaller than or equal to 5.0 m. For example, at (a) of FIG. 8, it is set that 150 vehicles having a height of equal to or smaller than 1.8 m are loaded at the port B and unloaded at the port D.

The control unit 20 is a processing unit that controls the entire information processing apparatus 10 and is realized by using, for example, a processor or the like. The control unit 20 includes an acceptance unit 21, a formulation unit 22, an optimization unit 23, and an output computation unit 24. The acceptance unit 21, the formulation unit 22, the optimization unit 23, and the output computation unit 24 may be realized by an electronic circuit such as a processor or may be realized as an example of a process executed by the processor.

The acceptance unit 21 is a processing unit that accepts the ship information 14 and the vehicle carrying-in/carrying-out table 15. For example, the acceptance unit 21 accepts the ship information 14 and the vehicle carrying-in/carrying-out table 15 from an administrator terminal or the like via the communication unit 11 and stores the ship information 14 and vehicle carrying-in/carrying-out table 15 in the storage unit 13. The ship information 14 and the vehicle carrying-in/carrying-out table 15 may be information artificially generated by an administrator or the like or information generated by using a known tool or the like.

The formulation unit 22 is a processing unit that formulates the constraint conditions and an objective function by using the ship information 14, the vehicle carrying-in/carrying-out table 15, and so forth. For example, the formulation unit 22 considers an optimization problem according to Embodiment 1 as a mathematical optimization problem and generates a plurality of constraint conditions (constraint conditions 1 to 5) and the objective function.

(Assumption)

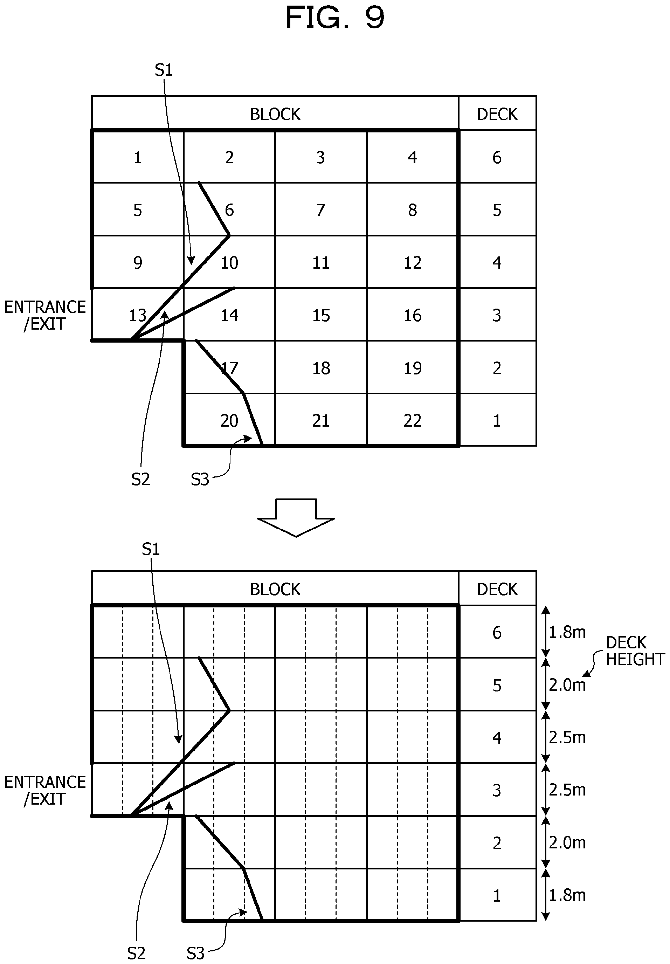

The formulation unit 22 divides each block (region) into cells and assigns a binary variable to each cell. FIG. 9 is a schematic diagram in which the blocks are divided into the cells. As illustrated in FIG. 9, each block is divided into four cells. Preferably, the number of divisions (the number of cells) is determined in accordance with the specification of the optimization apparatus. For example, when the cells are divided excessively finely, the number of variables increases and the optimization performed by the optimization apparatus slows down. Thus, it is preferable that the number of divisions be determined in accordance with processing capacity of the optimization apparatus.

The formulation unit 22 determines definitions of the variables and the constants as follows. A variable "$x_{ijtkm}$" is a value of "1" or "0". When $x_{ijtkm}$ is "1", it indicates that a vehicle of which the loading port is i, the unloading port is j, and the vehicle height is t is present in a cell m in a block k. Otherwise, "0" is indicated. A variable $x_{ijtkm}$ for which the vehicle height t is not selectable for each deck is not defined from the beginning. When no variable is assigned to a cargo with a height greater than or equal to the height of the section for each section as described above, a state in which "there is no cargo with a height greater than or equal to the height of the section in each section" may be expressed. For example, since vehicles having a vehicle height of equal to or greater than 2.0 is unable to be disposed in the deck 6, the variable $x_{ijtkm}$ with k = 1 and t = 2.0 to 5.0 is not defined. In this way, the optimization apparatus is unable to select a solution with which a vehicle having a vehicle height of equal to or greater than 2.0 is disposed in the block 1. At k = 11 of the deck 4, since the maximum deck height is 2.5, the $x_{ijtkm}$ with t = 1.8 to 2.5 is defined, and the $x_{ijtkm}$ with t = 3.0 to 5.0 is not defined. The number of the vehicles with the vehicle height of t to be loaded at a loading port i and unloaded at unloading port j is "$c_{ijt}$". The maximum carrying number of the vehicles of the cell m in the block k is "$b_{km}$". The number of loading ports is "M", the number of unloading ports is "N", the number of blocks is "R", and the number of cells in the block k is "$S_k$".

(Constraint Condition 1)

Next, the constraint condition 1 is described. For example, the formulation unit 22 generates the constraint condition 1 indicating that there is no other cargo in each section in the path from the cargo to be carried in or carried out to the entrance/exit at the time of carrying in or carrying out the cargo. For example, the formulation unit 22 generates the constraint condition 1 indicating that "when a vehicle passes through a certain block, this vehicle is unable to pass through the block unless the number of vehicles present in the block is 0".

For example, when there is a vehicle in a certain cell, a block between the certain cell and the entrance/exit is focused. In this case, it is sufficient that neither a vehicle of a loading port before a loading port of the vehicle in the certain cell nor a vehicle of an unloading port after an unloading port of the vehicle in the certain cell be present in the block. Accordingly, when there is a vehicle of the loading port of p, unloading port of q, and the vehicle height of t is present in the cell s in the block r, the formulation unit 22 may define the sum $y_{pq}$ of the vehicles with the loading port of i, the unloading port of j, and the vehicle height of t' obstructing the passage by Expression (1) with the block between the cell s and the entrance/exit defined as k'.

$$y_{pq} = \sum_{i=1}^{p-1}\sum_{j=1}^{N}\sum_{t'\in T'}\sum_{k'}\sum_{m=1}^{S_{k'}} x_{ijt'km} + \sum_{i=1}^{M}\sum_{j=q+1}^{N}\sum_{t'\in T'}\sum_{k'}\sum_{m=1}^{S_{k'}} x_{ijt'km} \quad \cdots (1)$$

It is sufficient that (when $x_{pqtrs}$ = 1, $y_{pq}$ = 0) and (when $x_{pqtrs}$ = 1, $y_{pq}$ is an arbitrary value) be satisfied for a certain $x_{pqtrs}$. This may be defined as given by Expression (2). At this time, ($x_{pqtrs} \cdot y_{pq}$) is minimized. Accordingly, it is sufficient that Expression (3) that is the sum for all p, q, t, r, and s hold. A set of vehicle height categories selectable in the block k is indicated by T, and a set of vehicle height categories selectable in the block k' is indicated by T'.

$$x_{pqtrs} \cdot y_{pq} = 0 \qquad \cdots (2)$$

$$B = \sum_{p=1}^{M} \sum_{q=1}^{N} \sum_{t \in T}^{} \sum_{r=1}^{R} \sum_{s=1}^{S_r} (x_{pqtrs} \cdot y_{pq}) \qquad \cdots (3)$$

(Constraint Condition 2)

Next, the constraint condition 2 is described. For example, the formulation unit 22 generates the constraint condition 2 indicating that, for each of the plurality of sections, the number of cargoes to be carried into the section which is the number of vehicles not exceeding the height of the section and the number of cargoes carried out from the section which is the number of vehicles not exceeding the height of the section are designated in advance. For example, the formulation unit 22 generates the constraint condition 2 indicating that "the numbers of vehicles loaded at the loading ports and unloaded at the unloading ports are values designated in the vehicle carrying-in/carrying-out table 15".

For example, it is sufficient that the total sum of the vehicles at the loading port p and the unloading port q in the entire vehicle transport ship be equal to a value $c_{pqt}$ in the vehicle carrying-in/carrying-out table 15. This is defined by Expression (4). Accordingly, it is sufficient that Expression (5) for the sum of all p, q, and t hold.

$$\sum_{k=1}^{R} \sum_{m=1}^{S_k} b_{km} x_{pqtkm} = c_{pqt} \qquad \cdots (4)$$

$$C = \sum_{p=1}^{M} \sum_{q=1}^{N} \sum_{t \in T}^{} \left( \sum_{k=1}^{R} \sum_{m=1}^{S_k} b_{km} x_{pqtkm} - c_{pqt} \right)^2 \qquad \cdots (5)$$

(Constraint Condition 3)

Next, the constraint condition 3 is described. For example, the formulation unit 22 generates the constraint condition 3 indicating that, in each of the plurality of sections, cargoes not exceeding the height of the section are disposed such that the range of the preset carrying capacity is not exceeded. For example, the formulation unit 22 generates the constraint condition 3 indicating that "vehicles greater than or equal to an allowable carrying amount are unable to be loaded in a single cell".

For example, a vehicle of any one of the ports is present in a cell, but vehicles of two ports are not present in the same cell. For example, it is sufficient that, for the cell s in the certain block r, the total sum of all the ports and vehicle heights be 0 or 1. This is defined by Expression (6). A certain $x_{ijtrs}$ may be defined by Expression (7). Accordingly, it is sufficient that Expression (8) that is a sum for all r and s hold.

$$\sum_{i=1}^{M} \sum_{j=1}^{N} \sum_{t \in T}^{} x_{ijtrs} = 0 \; or \; 1 \qquad \cdots (6)$$

$$\left( \sum_{i=1}^{M} \sum_{j=1}^{N} \sum_{t \in T}^{} x_{ijtrs} \right) \left( \sum_{i=1}^{M} \sum_{j=1}^{N} \sum_{t \in T}^{} x_{ijtrs} - 1 \right) = 0 \qquad \cdots (7)$$

$$D = \sum_{i=1}^{R} \sum_{j=1}^{S_r} \left\{ \left( \sum_{i=1}^{M} \sum_{j=1}^{N} \sum_{t \in T} x_{ijtrs} \right) \left( \sum_{i=1}^{M} \sum_{j=1}^{N} \sum_{t \in T} x_{ijtrs} - 1 \right) \right\} \qquad \cdots (8)$$

(Constraint Condition 4)

Next, the constraint condition 4 is described. The formulation unit 22 generates the constraint condition 4 indicating that, in a case where a tall vehicle having a height greater than or equal to a certain value (for example, greater than or equal to 3.0 m) attempts to pass below a panel in the path to the entrance/exit, the tall vehicle is unable to pass unless the height of the panel is able to be changed to the height greater than or equal to the height of the tall vehicle, and, in a case where a vehicle attempts to pass above the panel, the vehicle is unable to pass when the tall vehicle is disposed below the panel.

For example, the formulation unit 22 generates the constraint condition 4 indicating that "when a tall vehicle attempts to pass through a deck below a panel, the tall vehicle is unable to pass in a case where the deck height of the deck below the panel is unable to become greater than the vehicle height of the tall vehicle because a vehicle is disposed in a deck above the panel" and "when a vehicle attempts to pass through a deck above a panel, the vehicle is unable to pass in a case where the deck height of the deck above the panel is smaller than the vehicle height of the vehicle in the deck above the panel because a tall vehicle is disposed in a deck below the panel".

When the vehicle attempts to pass through a deck above or below the panel, in a case where a vehicle having a high vehicle height is present in a deck on the opposite side of the panel from the path, the deck height desired for passing is not necessarily secured. This becomes an obstacle. Accordingly, since the condition that this vehicle is not present may be thought similarly to the constraint condition 1, the constraint condition 4 represented by Expression (9) and Expression (10) is generated.

$$E = \sum_{p=1}^{M} \sum_{q=1}^{N} \sum_{t \in T_r} \sum_{r \in R_t} \sum_{s=1}^{S_r} \left( x_{pqtrs} \cdot z_{pqtrs} \right) \qquad \cdots (9)$$

$$z_{pqtrs} = \left( \sum_{i=1}^{p-1} \sum_{j=1}^{N} + \sum_{i=1}^{M} \sum_{j=q+1}^{N} \right) \sum_{t' \in T_n} \sum_{(k,m) \in C_p} x_{ijt'km} \qquad \cdots (10)$$

A set of blocks of the upper and lower decks of the panel are indicated by $R_t$. Sets of vehicle height categories are indicated by T, as follows: when the block r is in the deck below the panel, T, indicates a set of the vehicle height categories for which the panel is desired to be raised; and, when the block r is in the deck above the panel, T, indicates a set of the vehicle height categories selectable in the deck above the panel. A set of cells on the opposite side of the panel, in the up-down direction, from cells in the path from the cell (r, s) to the entrance/exit are indicated by $C_p$. A set of vehicle height categories of vehicles that are obstructive in a cell (k, m) when a vehicle having a height of t passes are indicated by $T_n$.

(Constraint Condition 5)

Next, the constraint condition 5 is described. The formulation unit 22 generates the constraint condition 5 indicating that, in a case where the panel is raised due to the disposition of a tall vehicle, only vehicles having a height from the raised panel to the ceiling may be disposed above the panel.

For example, the formulation unit 22 generates the constraint condition 5 indicating that "when a panel is raised due to a tall vehicle, only vehicles having a vehicle height smaller than the reduced deck height are able to be disposed in the deck above the panel". Although the presence of a vehicle having a high vehicle height in the upper deck becomes obstructive when the panel is raised due to a tall vehicle, the condition that the vehicle is not present may be thought similarly to the constraint condition 1. Thus, the constraint condition 5 represented by Expression (11) and Expression (12) is generated.

$$F = \sum_{p=1}^{M} \sum_{q=1}^{N} \sum_{t \in T_b} \sum_{r \in R_b} \sum_{s=1}^{S_r} \left( x_{pqtrs} \cdot v_{pqtrs} \right) \qquad \cdots (11)$$

$$v_{pqtrs} = \sum_{i=1}^{M} \sum_{j=1}^{N} \sum_{t' \in T_t} \sum_{(k,m) \in C_t} x_{ijt'km} \qquad \cdots (12)$$

A set of blocks of the deck below the panel is indicated by $R_b$. A set of vehicle height categories for which the panel is desired to be raised in the deck below the panel are indicated by $T_b$. A set of cells immediately above the cell (r, s) are indicated by $C_t$. A set of vehicle height categories that become unable to be disposed in the upper deck when the panel is raised are indicated by $T_t$.

(Objective Function)

Next, an objective function is described. For example, in order to improve the stability of the vehicle transport ship, it is preferable that the formulation unit 22 set the position of the center of gravity of the vehicle transport ship as low as possible. A value $G_i$ indicating the degree of instability of the vehicle transport ship is defined as the difference between the carrying amount of the decks in an upper half and the carrying amount of the decks in a lower half. For example, according to Embodiment 1, it is defined that "$G_i$ = (carrying amount of the deck 4 and above) - (carrying amount of the deck 3 and below)". For this reason, $G_i$ at the time of departure from each port may be defined by Expression (13). For example, $G_1$ in Expression (13) corresponds to the degree of instability at the time of departure from a loading port A. As a result of these, the objective function is represented by Expression (14) using the average of $G_i$.

$$G_1 = \sum_{i=1}^{1} \sum_{j=1}^{N} \left( \sum_{t \in T} \sum_{k=1}^{12} \sum_{m=1}^{S_k} b_{km} x_{ijtkm} - \sum_{t \in T} \sum_{k=13}^{22} \sum_{m=1}^{S_k} b_{km} x_{ijtkm} \right)$$

$$G_2 = \sum_{i=1}^{2} \sum_{j=1}^{N} \left( \sum_{t \in T} \sum_{k=1}^{12} \sum_{m=1}^{S_k} b_{km} x_{ijtkm} - \sum_{t \in T} \sum_{k=13}^{22} \sum_{m=1}^{S_k} b_{km} x_{ijtkm} \right)$$

$$\cdots$$

$$G_{M+N-2} = \sum_{i=1}^{M} \sum_{j=N-1}^{N} \left( \sum_{t \in T} \sum_{k=1}^{12} \sum_{m=1}^{S_k} b_{km} x_{ijtkm} - \sum_{t \in T} \sum_{k=13}^{22} \sum_{m=1}^{S_k} b_{km} x_{ijtkm} \right)$$

$$G_{M+N-1} = \sum_{i=1}^{M} \sum_{j=N}^{N} \left( \sum_{t \in T} \sum_{k=1}^{12} \sum_{m=1}^{S_k} b_{km} x_{ijtkm} - \sum_{t \in T} \sum_{k=13}^{22} \sum_{m=1}^{S_k} b_{km} x_{ijtkm} \right)$$

$$\cdots (13)$$

$$G = \frac{G_1 + G_2 + \cdots G_{M+N-2} + G_{M+N-1}}{M + N - 1} \qquad \cdots (14)$$

As has been described, the formulation unit 22 generates the constraint conditions 1 to 5 and the objective function and outputs these to the optimization unit 23.

The optimization unit 23 is a processing unit that optimizes the degree of instability of the vehicle transport ship under the constraint conditions 1 to 5. For example, the optimization unit 23 calculates a solution that minimizes (reduces as much as possible) the degree of instability by solving an optimization problem with the constraint conditions.

For example, the optimization unit 23 uses arbitrary constants ($\beta$, $\gamma$, $\delta$, $\varepsilon$, $\zeta$, $\sigma$) set in advance to generate an energy function E represented by Expression (15), which is a sum of the above-described constraint conditions 1 to 3 and the objective function. The optimization unit 23 inputs the energy function E to the optimization apparatus such as an Ising machine or an annealing calculator and executes the optimization apparatus to calculate a value that minimizes the value of the objective function.

$$
\begin{aligned}
E = {}& \beta \sum_{p=1}^{M} \sum_{q=1}^{N} \sum_{t \in T} \sum_{r=1}^{R} \sum_{s=1}^{S_r} \left\{ x_{pqtrs} \cdot \left( \sum_{i=1}^{p-1} \sum_{j=1}^{N} + \sum_{i=1}^{M} \sum_{j=q+1}^{N} \right) \sum_{t' \in T'} \sum_{k'} \sum_{m=1}^{S_{k'}} x_{ijt'km} \right\} \cdots \text{Constraint Condition 1} \\
&+ \gamma \sum_{p=1}^{M} \sum_{q=1}^{N} \sum_{t \in T} \left( \sum_{k=1}^{R} \sum_{m=1}^{S_k} b_{km} x_{pqtkm} - c_{pqt} \right)^2 \cdots \text{Constraint Condition 2} \\
&+ \delta \sum_{i=1}^{R} \sum_{j=1}^{S_r} \sum_{t \in T} \left\{ \left( \sum_{i=1}^{M} \sum_{j=1}^{N} \sum_{t \in T} x_{ijtrs} \right) \left( \sum_{i=1}^{M} \sum_{j=1}^{N} \sum_{t \in T} x_{ijtrs} - 1 \right) \right\} \cdots \text{Constraint Condition 3} \\
&+ \varepsilon \sum_{p=1}^{M} \sum_{q=1}^{N} \sum_{t \in T_r} \sum_{r \in R_t} \sum_{s=1}^{S_r} \left\{ x_{pqtrs} \cdot \left( \sum_{i=1}^{p-1} \sum_{j=1}^{N} + \sum_{i=1}^{M} \sum_{j=q+1}^{N} \right) \sum_{t' \in T_n} \sum_{(k,m) \in C_p} x_{ijt'km} \right\} \cdots \text{Constraint Condition 4} \\
&+ \zeta \sum_{p=1}^{M} \sum_{q=1}^{N} \sum_{t \in T_b} \sum_{r \in R_b} \sum_{s=1}^{S_r} \left\{ x_{pqtrs} \cdot \sum_{i=1}^{M} \sum_{j=1}^{N} \sum_{t' \in T_n} \sum_{(k,m) \in C_p} x_{ijt'km} \right\} \cdots \text{Constraint Condition 5} \\
&+ \sigma \left( \frac{G_1 + G_2 + \cdots + G_{M+N-2} + G_{M+N-1}}{M + N - 1} \right) \cdots \text{Objective Function} \\
&\left( \text{where} \quad G_p = \sum_p \left( \sum_{t \in T} \sum_{k=1}^{12} \sum_{m=1}^{S_k} b_{km} x_{ijtkm} - \sum_{t \in T} \sum_{k=13}^{22} \sum_{m=1}^{S_k} b_{km} x_{ijtkm} \right), \beta, \gamma, \delta, \text{ and } \varepsilon \text{ are constants} \right)
\end{aligned}
$$

$$\cdots (15)$$

The output computation unit 24 is a processing unit that computes an optimum vehicle disposition. For example, the output computation unit 24 uses a solving result by the optimization apparatus obtained by the optimization unit 23 to determine an optimum vehicle disposition that minimizes the degree of instability of the vehicle transport ship. The output computation unit 24 displays the determined vehicle disposition in the display unit 12 or stores the determined vehicle disposition in the storage unit 13.

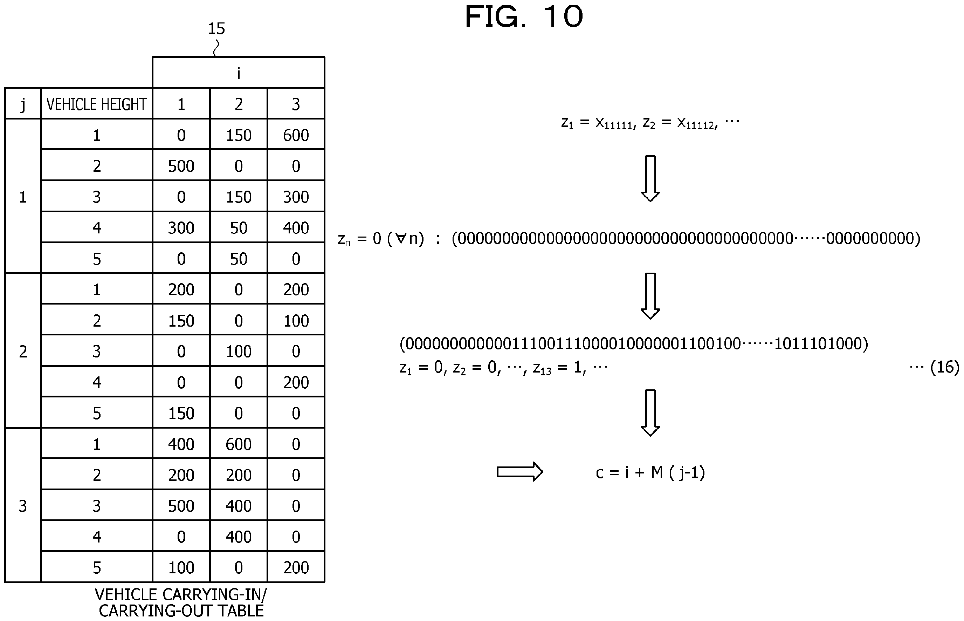

FIG. 10 is a diagram explaining solving by the optimization apparatus and computation for the vehicle disposition represented by the solution. As illustrated in FIG. 10, the output computation unit 24 defines a binary variable $z_n$ and associates $z_n$ with $x_{ijkm}$ such as $z_1 = x_{1111}$, and $z_2 = x_{1112}$. For example, when a computation is performed by the optimization apparatus with $z_n = 0$, (000...000) as an initial solution, a solution represented by Expression (16) in FIG. 10 ($z_1 = 1$, $z_2 = 0$, ..., $z_{13} = 1...$) is obtained.

Since a vehicle is present when $z_n = 1$, the output computation unit 24 extracts n with which $z_n = 1$ and obtains corresponding i, j, t, k, and m. Thus, the output computation unit 24 may express that a vehicle with a loading port of i, an unloading port of j, and a vehicle height of t is present in the cell m in the block k.

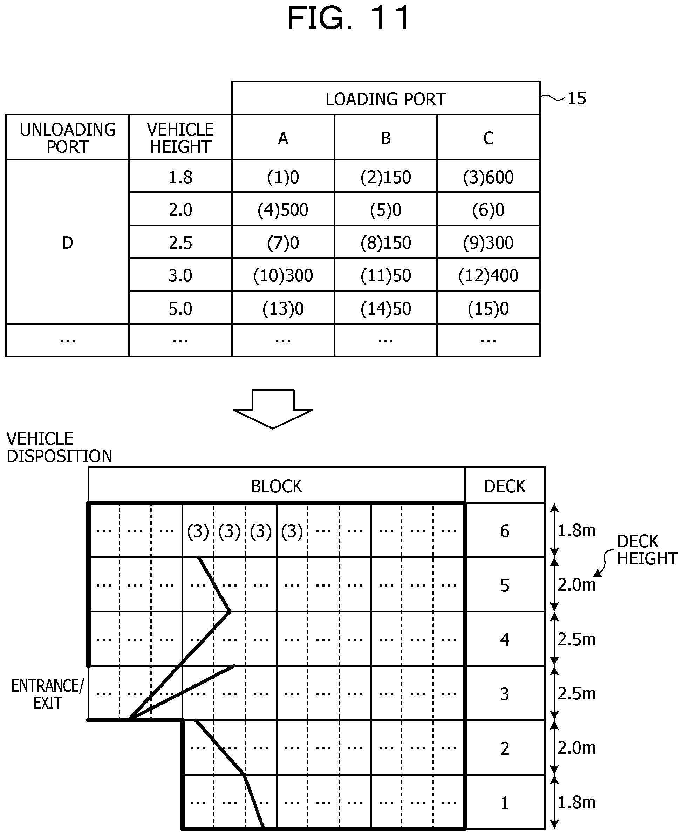

When the above-described process is executed, the output computation unit 24 calculates the unloading port j, the vehicle height t, the cell m in the block k, and the loading port i for which the vehicle is present and determines the vehicle disposition by associating these with a schematic diagram. FIG. 11 is a diagram explaining an optimized vehicle disposition. As illustrated in FIG. 11, the output computation unit 24 generates the schematic diagram representing the disposition of the vehicles such as a vehicle (1) and the like indicated in the vehicle carrying-in/carrying-out table 15 and displays the schematic diagram in the display unit 12. In an example of the schematic diagram illustrated in FIG. 11, for example, 600 vehicles (3) having a vehicle height of 1.8 m, to be loaded at a loading port C and unloaded at an unloading port D are disposed in the deck 6.

(Flow of Process)

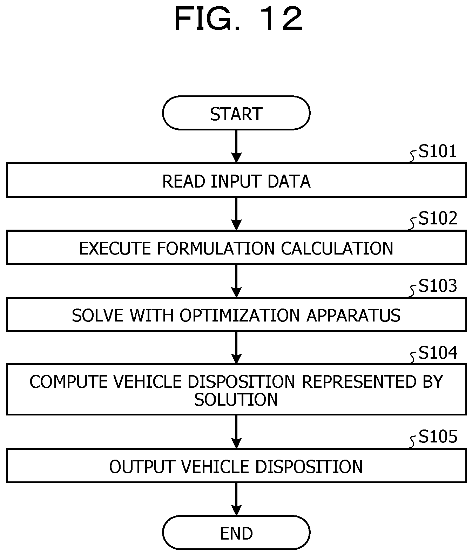

FIG. 12 is a flowchart illustrating a flow of the optimization process. As illustrated in FIG. 12, when the process is started, the acceptance unit 21 of the information processing apparatus 10 obtains and reads input data (S101). For example, the acceptance unit 21 reads the ship information 14 and the vehicle carrying-in/carrying-out table 15.

Next, the formulation unit 22 executes a formulation calculation that generates each constraint condition, the objective function, and the like based on the ship information 14 and the vehicle carrying-in/carrying-out table 15 (S102). The optimization unit 23 generates the energy function that adds each constraint condition and the objective function together, inputs the energy function to the optimization apparatus, and obtains the result of solving by the optimization apparatus (S103).

After that, the output computation unit 24 computes the vehicle disposition represented by the result of solving (solution) by the optimization apparatus (S104) and outputs the vehicle disposition obtained through the computation (S105).

(Formulation Calculation)

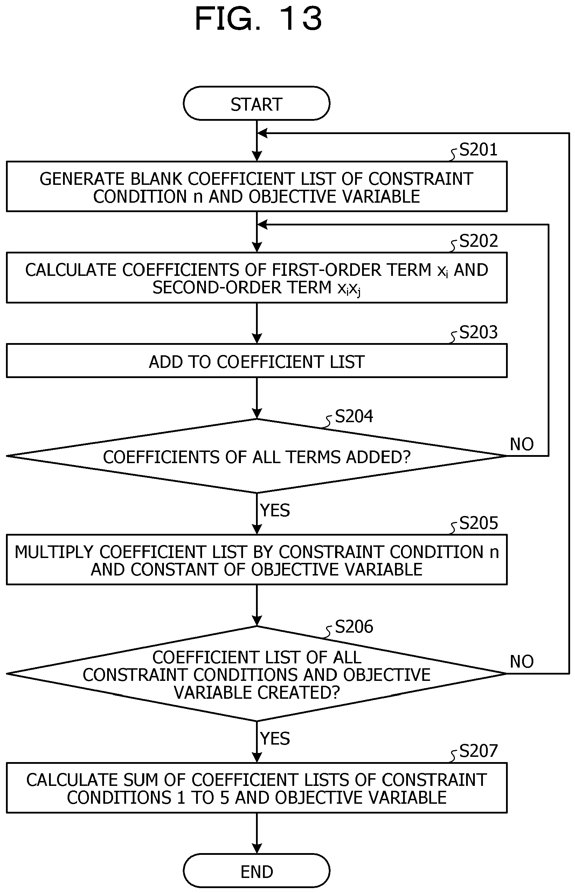

Next, a flow of the formulation calculation executed in S102 of FIG. 12 is described. FIG. 13 is a flowchart illustrating a flow of the formulation calculation. As illustrated in FIG. 13, the formulation unit 22 generates a blank coefficient list of an objective variable and a constraint condition n (S201).

Next, the formulation unit 22 calculates coefficients of a first-order term $x_i$ and a second-order term $x_i x_j$ (S202) and adds the coefficients to the coefficient list (S203).

The formulation unit 22 repeats S202 and after until the coefficients for all the terms are added (S204: No). When the addition of the coefficients for all the terms is completed (S204: Yes), the formulation unit 22 multiplies the coefficient list by the constraint condition n and the constant of the objective variable (S205).

After that, the formulation unit 22 repeats the processing in S201 and after until the coefficient lists of all the constraint conditions and the objective variable are created (S206: No). When the coefficient lists of all the constraint conditions and the objective variable have been completed (S206: Yes), the formulation unit 22 calculates the sum of the coefficient lists of the constraint conditions 1 to 5 and the objective variable (S207).

(Effects)

As has been described, in a case where a problem is considered as a mathematical optimization problem, the constraint conditions and the objective function are determined from the input data, and the problem is solved by using the optimization apparatus, the information processing apparatus 10 may automatically generate the constraint conditions in which the height of the decks in which the vehicles are loaded and the height of the vehicles to be loaded are considered. As a result, even in a case where the deck height in the ship is different or in a case where the deck height is variable by using the panel, the information processing apparatus 10 may determine an optimum vehicle disposition and may improve the accuracy of the optimization of the cargo disposition.

Since the information processing apparatus 10 may automatically generate the constraint conditions desired for the optimization, not only the burden on a user but also the time for optimization of the cargo disposition may be reduced and service such as cargo transport may be improved.

Since the information processing apparatus 10 may execute the generation of the desired constraint conditions and the optimization by reading the ship information 14 and the vehicle carrying-in/carrying-out table 15 set by the user, the overall throughput of the optimization process may be reduced and the speed of the processing may be increased.

Even in a case where carrying in and carrying out occur a plurality of times, the information processing apparatus 10 may reduce the time taken to execute the optimization. For example, even for a problem that takes 30 minutes when it is solved manually, the vehicle disposition satisfying the constraints may be obtained in about five minutes with the optimization apparatus.

[Embodiment 2]

Although the embodiment of the present disclosure has been described, the present disclosure may be carried out in various forms other than the above-described embodiment.

(Numerical Values and So Forth)

The number of vehicles, the number of ports, the diagrams of the configuration in the ship, and so forth used in the above-described embodiment are merely exemplary and may be arbitrarily changed. Although the example in which the individual blocks of the vehicle transport ship are divided into a plurality of cells has been described according to the above-described embodiment, this is not limiting, and a single block may include a single cell. As the optimization apparatus that executes the optimization, an external apparatus coupled to the information processing apparatus 10 via, for example, any of various types of buses and networks may be used, or a processor or the like incorporated in the information processing apparatus 10 may be used. As the technique to optimize the energy function or the objective function, any of various known techniques may be employed. The center of gravity is an example of an index of the degree of instability.

(Cargo)

Although the description has been made with the example of the vehicle transport ship according to the above-described embodiment, this is not limiting. An object of the embodiment may be any of various cargoes and spaces such as a multi-story warehouse, a flat parking area, and a cargo storage space. The cargoes are not limited to the vehicles. Any of various types of delivery objects such as cardboard boxes may be similarly processed. The degree of instability of the target space is exemplified not only by the center of gravity of a moving object that transports cargoes but also by an appropriate position, the center of gravity, and the like of a warehouse in which the cargoes are disposed.

(Panel)

Although the description has been made with the example using the panels of a two-deck through type according to the above-described embodiment, this is not limiting. An optimum vehicle disposition may be obtained under the same constraint conditions as those of the embodiment even when panels of a three or more deck through type are used. The panels used according to the above-described embodiment are movable in the vertical direction. However, panels movable in the horizontal direction may also be similarly processed to those of the vertical direction when the movability in the horizontal direction is converted by 90 degrees.

(System)

The processing procedures, control procedures, specific names, and information including various types of data and parameters described and illustrated in the above description and drawings may be arbitrarily changed unless otherwise specified.

Each element of the apparatuses illustrated in the drawings is conceptual in function and is not necessarily configured physically as illustrated in the drawings. For example, the specific form of distribution or integration of the apparatuses is not limited to that illustrated in the drawings. For example, the entirety or part of the apparatuses may be configured by being functionally or physically distributed or integrated in an arbitrary unit in accordance with various types of loads, usage states, or the like. The acceptance unit 21 is an example of an acceptance unit, the formulation unit 22 is an example of an obtaining unit, an identification unit, and a generation unit, and the optimization unit 23 and the output computation unit 24 are examples of a determination unit.

All or arbitrary part of the processing functions performed by the apparatuses may be realized by a central processing unit (CPU) and a program analyzed and executed by the CPU or may be realized as hardware using wired logic.

(Hardware)

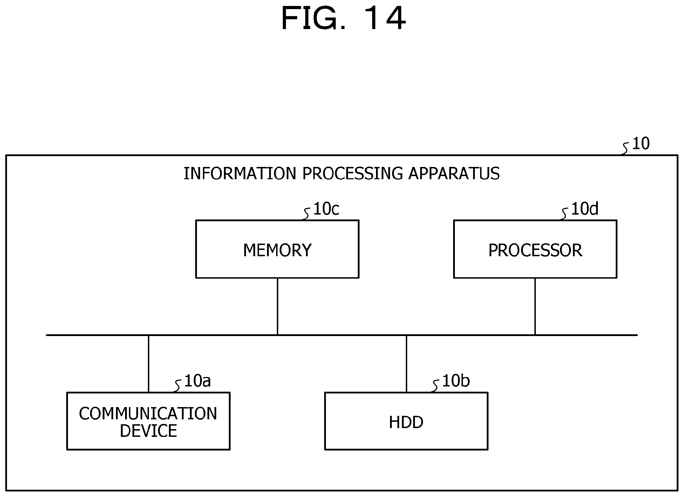

Next, an example of a hardware configuration of the information processing apparatus 10 is described. FIG. 14 is a diagram explaining the example of the hardware configuration. As illustrated in FIG. 14, the information processing apparatus 10 includes a communication device 10a, a hard disk drive (HDD) 10b, a memory 10c, and a processor 10d. The components illustrated in FIG. 14 are coupled to each other through a bus or the like.

The communication device 10a is a network interface card or the like and communicates with an other server. The HDD 10b stores the program for causing the functions illustrated in FIG. 4 to operate, a database (DB), and the like.

The processor 10d reads, from the HDD 10b or the like, the program that executes processing similar to the processing performed by the processing units illustrated in FIG. 4 and loads the read program on the memory 10c so as to cause a process that executes the functions described in FIG. 4 or the like to operate. For example, this process executes the functions similar to the functions of the processing units included in the information processing apparatus 10. For example, the processor 10d reads the program having the similar functions to those of, for example, the acceptance unit 21, the formulation unit 22, the optimization unit 23, and the output computation unit 24 from the HDD 10b or the like. The processor 10d executes the process that executes the similar processing to those of, for example, the acceptance unit 21, the formulation unit 22, the optimization unit 23, and the output computation unit 24.

As described above, the information processing apparatus 10 operates as an information processing apparatus that executes the method for optimization by reading and executing a program. The information processing apparatus 10 may also realize functions similar to those of the above-described embodiment by reading the above-described program from a recording medium with a medium reading device and executing the above-described read program. The program described for an other embodiment is not limited to the program to be executed by the information processing apparatus 10. For example, the present disclosure may be similarly applied to a case where an other computer or server executes the program or a case where the other computer and server execute the program in cooperation with each other.

The program may be distributed via a network such as the Internet. The program may be recorded in a computer-readable recording medium such as a hard disk, a flexible disk (FD), a compact disc read-only memory (CD-ROM), a magnetooptical (MO) disk, or a Digital Versatile Disc (DVD), and may be executed by being read from the recording medium by a computer.

## Claims

1. An information processing apparatus comprising:

   an acceptance unit that spatial information related to a space in which a plurality of cargoes are disposed, the spatial information including a height of each of the plurality of subspaces and a first path between a plurality of subspaces included in the space;
   a generation unit that generates, according to the spatial information, a first constraint condition which indicates that no other cargo is present in one of the subspaces in the first path from another of the subspaces where a cargo to be carried into or a cargo to be carried out is disposed to an entrance/exit of the space when the plurality of cargoes are carried into or carried from the space, a second constraint condition which indicates, for each of the plurality of subspaces, a number of cargoes that do not exceed the height of the subspace and that are able to be disposed in the subspace, and a third constraint condition which indicates, for each of the plurality of subspaces, a maximum carrying capacity of the cargoes that do not exceed the height of the subspace; and
   a determination unit that determines, based on the first constraint condition, the second constraint condition, and the third constraint condition, disposition of the plurality of cargoes in the space on condition that, in each of the plurality of subspaces, a cargo out of the plurality of cargoes which exceeds the height of the subspace is not disposed.

2. The information processing apparatus according to claim 1, wherein

   the plurality of subspaces include a first subspace and a second subspace disposed above the first subspace, a height of the first subspace is variable, and, in a case where the height of the first subspace increases, a height of the second subspace reduces,
   the plurality of cargoes include a first cargo,
   the generation unit generates a fourth constraint condition which indicates that the first cargo is unable to pass through the first subspace when the height of the first subspace is unable to be changed to a height greater than or equal to a height of the first cargo and a cargo is unable to pass through the second subspace when the first cargo is disposed in the first subspace, and
   the determination unit determines the disposition of the plurality of cargoes in the space based on the first constraint condition, the second constraint condition, the third constraint condition, and the fourth constraint condition.

3. The information processing apparatus according to claim 2, wherein

   the generation unit generates a fifth constraint condition which indicates that, when the height of the first subspace increases due to the disposition of the first cargo in the first subspace, a cargo which has a height up to the reduced height of the second subspace is able to be disposed in the second subspace, and
   the determination unit determines the disposition of the plurality of cargoes in the space based on the first constraint condition, the second constraint condition, the third constraint condition, the fourth constraint condition, and the fifth constraint condition.

4. The information processing apparatus according to claim 3, wherein

   the generation unit generates an objective function with which a degree of instability of the space is calculated, and wherein
   the determination unit determines the disposition of the plurality of cargoes in the space by using an energy function that uses the first constraint condition, the second constraint condition, the third constraint condition, the fourth constraint condition, the fifth constraint condition, and the objective function.

5. The information processing apparatus according to claim 4, wherein the determination unit:

   inputs the energy function to an Ising machine, and
   determines the disposition of the plurality of cargoes in the space by using a solving result obtained with the Ising machine.

6. An optimization method for a computer to execute a process comprising:

   acquiring spatial information related to a space in which a plurality of cargoes are disposed, the spatial information including a height of each of the plurality of subspaces and a first path between a plurality of subspaces included in the space;
   generating, according to the spatial information, a first constraint condition which indicates that no other cargo is present in one of the subspaces in the first path from another of the subspaces where a cargo to be carried into or a cargo to be carried out is disposed to an entrance/exit of the space when the plurality of cargoes are carried into or carried from the space, a second constraint condition which indicates, for each of the plurality of subspaces, a number of cargoes that do not exceed the height of the subspace and that are able to be disposed in the subspace, and a third constraint condition which indicates, for each of the plurality of subspaces, a maximum carrying capacity of the cargoes that do not exceed the height of the subspace; and
   determining, based on the first constraint condition, the second constraint condition, and the third constraint condition, disposition of the plurality of cargoes in the space on condition that, in each of the plurality of subspaces, a cargo out of the plurality of cargoes which exceeds the height of the subspace is not disposed.

7. The optimization method according to claim 6, wherein

   the plurality of subspaces include a first subspace and a second subspace disposed above the first subspace, a height of the first subspace is variable, and, in a case where the height of the first subspace increases, a height of the second subspace reduces,
   the plurality of cargoes include a first cargo, and
   the process further comprising:

      generating a fourth constraint condition which indicates that the first cargo is unable to pass through the first subspace when the height of the first subspace is unable to be changed to a height greater than or equal to a height of the first cargo and a cargo is unable to pass through the second subspace when the first cargo is disposed in the first subspace; and
      determining the disposition of the plurality of cargoes in the space based on the first constraint condition, the second constraint condition, the third constraint condition, and the fourth constraint condition.

8. The optimization method according to claim 7, wherein the process further comprising:

   generating a fifth constraint condition which indicates that, when the height of the first subspace increases due to the disposition of the first cargo in the first subspace, a cargo which has a height up to the reduced height of the second subspace is able to be disposed in the second subspace; and
   determining the disposition of the plurality of cargoes in the space based on the first constraint condition, the second constraint condition, the third constraint condition, the fourth constraint condition, and the fifth constraint condition.

9. The optimization method according to claim 8, the process further comprising:

   generating an objective function which acquires a degree of instability of the space; and
   determining the disposition of the plurality of cargoes in the space by using an energy function that uses the first constraint condition, the second constraint condition, the third constraint condition, the fourth constraint condition, the fifth constraint condition, and the objective function.

10. The optimization method according to claim 9, the process further comprising:

    inputting the energy function to an Ising machine; and
    determining the disposition of the plurality of cargoes in the space by using a solving result obtained with the Ising machine.

**11.** An optimization program that causes at least one computer to execute a process, the process comprising:

acquiring spatial information related to a space in which a plurality of cargoes are disposed, the spatial information including a height of each of the plurality of subspaces and a first path between a plurality of subspaces included in the space;

generating, according to the spatial information, a first constraint condition which indicates that no other cargo is present in one of the subspaces in the first path from another of the subspaces where a cargo to be carried into or a cargo to be carried out is disposed to an entrance/exit of the space when the plurality of cargoes are carried into or carried from the space, a second constraint condition which indicates, for each of the plurality of subspaces, a number of cargoes that do not exceed the height of the subspace and that are able to be disposed in the subspace, and a third constraint condition which indicates, for each of the plurality of subspaces, a maximum carrying capacity of the cargoes that do not exceed the height of the subspace; and

determining, based on the first constraint condition, the second constraint condition, and the third constraint condition, disposition of the plurality of cargoes in the space on condition that, in each of the plurality of subspaces, a cargo out of the plurality of cargoes which exceeds the height of the subspace is not disposed.

**12.** The optimization program according to claim 11, wherein

the plurality of subspaces include a first subspace and a second subspace disposed above the first subspace, a height of the first subspace is variable, and, in a case where the height of the first subspace increases, a height of the second subspace reduces,

the plurality of cargoes include a first cargo, and

the process further comprising:

generating a fourth constraint condition which indicates that the first cargo is unable to pass through the first subspace when the height of the first subspace is unable to be changed to a height greater than or equal to a height of the first cargo and a cargo is unable to pass through the second subspace when the first cargo is disposed in the first subspace; and

determining the disposition of the plurality of cargoes in the space based on the first constraint condition, the second constraint condition, the third constraint condition, and the fourth constraint condition.

**13.** The optimization program according to claim 12, wherein the process further comprising:

generating a fifth constraint condition which indicates that, when the height of the first subspace increases due to the disposition of the first cargo in the first subspace, a cargo which has a height up to the reduced height of the second subspace is able to be disposed in the second subspace; and

determining the disposition of the plurality of cargoes in the space based on the first constraint condition, the second constraint condition, the third constraint condition, the fourth constraint condition, and the fifth constraint condition.

**14.** The optimization program according to claim 13, the process further comprising:

generating an objective function which acquires a degree of instability of the space; and

determining the disposition of the plurality of cargoes in the space by using an energy function that uses the first constraint condition, the second constraint condition, the third constraint condition, the fourth constraint condition, the fifth constraint condition, and the objective function.

**15.** The optimization program according to claim 14, the process further comprising:

inputting the energy function to an Ising machine; and

determining the disposition of the plurality of cargoes in the space by using a solving result obtained with the Ising machine.

# FIG. 1

INFORMATION PROCESSING APPARATUS — 10

OPTIMIZATION APPARATUS — 50

SPATIAL INFORMATION

CARRYING-IN/ CARRYING-OUT INFORMATION

GENERATE CONSTRAINT CONDITIONS

GENERATE OBJECTIVE FUNCTION

OPTIMIZE

DETERMINE DISPOSITION

# FIG. 2

# FIG. 3

PANEL

PANEL

DECK 4

DECK 3

ENTRANCE
/EXIT

SLOPE

MOVABLE THROUGH
TEMPORARY SLOPE

# FIG. 4

INFORMATION PROCESSING APPARATUS  ~10

CONTROL UNIT  ~20

ACCEPTANCE UNIT  ~21

FORMULATION UNIT  ~22

OPTIMIZATION UNIT  ~23

OUTPUT COMPUTATION UNIT  ~24

STORAGE UNIT  ~13

SHIP INFORMATION  ~14

VEHICLE CARRYING-IN/ CARRYING-OUT TABLE  ~15

COMMUNICATION UNIT  ~11

DISPLAY UNIT  ~12

EP 4 336 425 A1

# FIG. 5

| S1 | BLOCK | | | | DECK | |
|---|---|---|---|---|---|---|
| | 1 | 2 | 3 | 4 | 6 | 1.8m |
| | 5 | 6 | 7 | 8 | 5 | 2.0m |
| | 9 | 10 | 11 | 12 | 4 | 2.5m |
| ENTRANCE /EXIT | 13 | 14 | 15 | 16 | 3 | 2.5m |
| | | 17 | 18 | 19 | 2 | 2.0m |
| | 20 | 21 | 22 | | 1 | 1.8m |

DECK HEIGHT

S2    S3

# FIG. 6

# FIG. 7

| DECK | HEIGHT 1 | HEIGHT 2 | HEIGHT 3 |
|------|----------|----------|----------|
| 1 | 1.8 | | |
| 2 | 2.0 | | |
| 3 | 2.5 | 3.0 | 5.0 |
| 4 | 2.5 | 2.0 | 0.0 |
| 5 | 2.0 | | |
| 6 | 1.8 | | |

PANEL   PANEL

DECK 4

2.5m   2.0m

5.0m

DECK 3

2.5m   3.0m

ENTRANCE/
EXIT

EP 4 336 425 A1

# FIG. 8

| UNLOADING PORT | VEHICLE HEIGHT | LOADING PORT | | |
|---|---|---|---|---|
| | | A | B | C |
| D | 1.8 | 0 | 150 | 600 |
| | 2.0 | 500 | 0 | 0 |
| | 2.5 | 0 | 150 | 300 |
| | 3.0 | 300 | 50 | 400 |
| | 5.0 | 0 | 50 | 0 |
| E | 1.8 | 200 | 0 | 200 |
| | 2.0 | 150 | 0 | 100 |
| | 2.5 | 0 | 100 | 0 |
| | 3.0 | 0 | 0 | 200 |
| | 5.0 | 150 | 0 | 0 |
| F | 1.8 | 400 | 600 | 0 |
| | 2.0 | 200 | 200 | 0 |
| | 2.5 | 500 | 400 | 0 |
| | 3.0 | 0 | 400 | 0 |
| | 5.0 | 100 | 0 | 200 |

15

(a)

# FIG. 9

# FIG. 10

15

| j | VEHICLE HEIGHT | i | | |
|---|---|---|---|---|
| | | 1 | 2 | 3 |
| 1 | 1 | 0 | 150 | 600 |
| | 2 | 500 | 0 | 0 |
| | 3 | 0 | 150 | 300 |
| | 4 | 300 | 50 | 400 |
| | 5 | 0 | 50 | 0 |
| 2 | 1 | 200 | 0 | 200 |
| | 2 | 150 | 0 | 100 |
| | 3 | 0 | 100 | 0 |
| | 4 | 0 | 0 | 200 |
| | 5 | 150 | 0 | 0 |
| 3 | 1 | 400 | 600 | 0 |
| | 2 | 200 | 200 | 0 |
| | 3 | 500 | 400 | 0 |
| | 4 | 0 | 400 | 0 |
| | 5 | 100 | 0 | 200 |

VEHICLE CARRYING-IN/
CARRYING-OUT TABLE

$z_1 = x_{11111}, z_2 = x_{11112}, \cdots$

$\Downarrow$

$z_n = 0 \ (\forall n) : (00000000000000000000000000000000000000\cdots\cdots0000000000)$

$\Downarrow$

$(0000000000000111001110000100000011001001\cdots\cdots1011101000)$
$z_1 = 0, z_2 = 0, \cdots, z_{13} = 1, \cdots$ $\cdots (16)$

$\Downarrow$

$\Longrightarrow \quad c = i + M\,(j-1)$

# FIG. 11

| UNLOADING PORT | VEHICLE HEIGHT | LOADING PORT | | |
|---|---|---|---|---|
| | | A | B | C |
| D | 1.8 | (1)0 | (2)150 | (3)600 |
| | 2.0 | (4)500 | (5)0 | (6)0 |
| | 2.5 | (7)0 | (8)150 | (9)300 |
| | 3.0 | (10)300 | (11)50 | (12)400 |
| | 5.0 | (13)0 | (14)50 | (15)0 |
| | ... | ... | ... | ... |

~15

⬇

VEHICLE DISPOSITION

| BLOCK | | | | | | | | | | | DECK | |
|---|---|---|---|---|---|---|---|---|---|---|---|---|
| ... | ... | ... | (3) | (3) | (3) | (3) | ... | ... | ... | ... | ... | 6 | 1.8m |
| ... | ... | ... | ... | ... | ... | ... | ... | ... | ... | ... | 5 | 2.0m |
| ... | ... | ... | ... | ... | ... | ... | ... | ... | ... | ... | 4 | 2.5m |
| ... | ... | ... | ... | ... | ... | ... | ... | ... | ... | ... | 3 | 2.5m |
| ... | ... | ... | ... | ... | ... | ... | ... | ... | 2 | 2.0m |
| ... | ... | ... | ... | ... | ... | ... | ... | ... | 1 | 1.8m |

ENTRANCE/ EXIT

DECK HEIGHT

# FIG. 12

```
         ┌─────────────┐
         │    START    │
         └─────────────┘
                │
                ▼                      ⌐S101
   ┌──────────────────────────────────┐
   │         READ INPUT DATA           │
   └──────────────────────────────────┘
                │
                ▼                      ⌐S102
   ┌──────────────────────────────────┐
   │   EXECUTE FORMULATION CALCULATION │
   └──────────────────────────────────┘
                │
                ▼                      ⌐S103
   ┌──────────────────────────────────┐
   │   SOLVE WITH OPTIMIZATION APPARATUS│
   └──────────────────────────────────┘
                │
                ▼                      ⌐S104
   ┌──────────────────────────────────┐
   │ COMPUTE VEHICLE DISPOSITION       │
   │ REPRESENTED BY SOLUTION           │
   └──────────────────────────────────┘
                │
                ▼                      ⌐S105
   ┌──────────────────────────────────┐
   │    OUTPUT VEHICLE DISPOSITION     │
   └──────────────────────────────────┘
                │
                ▼
         ┌─────────────┐
         │     END     │
         └─────────────┘
```

# FIG. 13

START

S201
GENERATE BLANK COEFFICIENT LIST OF CONSTRAINT
CONDITION n AND OBJECTIVE VARIABLE

S202
CALCULATE COEFFICIENTS OF FIRST-ORDER TERM $x_i$ AND
SECOND-ORDER TERM $x_i x_j$

S203
ADD TO COEFFICIENT LIST

S204
COEFFICIENTS OF ALL TERMS ADDED?　　NO

YES

S205
MULTIPLY COEFFICIENT LIST BY CONSTRAINT CONDITION n
AND CONSTANT OF OBJECTIVE VARIABLE

S206
COEFFICIENT LIST OF ALL
CONSTRAINT CONDITIONS AND OBJECTIVE
VARIABLE CREATED?　　NO

YES

S207
CALCULATE SUM OF COEFFICIENT LISTS OF CONSTRAINT
CONDITIONS 1 TO 5 AND OBJECTIVE VARIABLE

END

# FIG. 14

INFORMATION PROCESSING APPARATUS 10

MEMORY 10c

PROCESSOR 10d

COMMUNICATION DEVICE 10a

HDD 10b

Europäisches
Patentamt

European
Patent Office

Office européen
des brevets

# EUROPEAN SEARCH REPORT

Application Number

EP 23 18 0265

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 896 630 A1 (FUJITSU LTD [JP]) 20 October 2021 (2021-10-20) * abstract * * paragraphs [0006], [0014], [0020] - [0022], [0043], [0058] - [0075], [0081] * ----- | 1-15 | INV. G06Q10/04 G06Q10/08 G06Q10/083 |

TECHNICAL FIELDS
SEARCHED        (IPC)

G06Q

The present search report has been drawn up for all claims

| Place of search | Date of completion of the search | Examiner |
|---|---|---|
| Munich | 24 January 2024 | Moltenbrey, Michael |

EPO FORM 1503 03.82 (P04C01)

**ANNEX TO THE EUROPEAN SEARCH REPORT
ON EUROPEAN PATENT APPLICATION NO.**

EP 23 18 0265

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2024

| Patent document cited in search report | | Publication date | Patent family member(s) | | Publication date |
|---|---|---|---|---|---|
| EP 3896630 | A1 | 20-10-2021 | CN | 113537871 A | 22-10-2021 |
| | | | EP | 3896630 A1 | 20-10-2021 |
| | | | US | 2021319528 A1 | 14-10-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003173366 A
- JP 2015230660 A
- JP 2021169369 A